(19) Europäisches Patentamt / European Patent Office / Office européen des brevets

(11) **EP 4 189 635 B1**

(12) **FASCICULE DE BREVET EUROPEEN**

(45) Date de publication et mention
de la délivrance du brevet:
**04.09.2024   Bulletin 2024/36**

(21) Numéro de dépôt: **21746367.8**

(22) Date de dépôt: **08.07.2021**

(51) Classification Internationale des Brevets (IPC):
*G06T 5/50* *(2006.01)*        *G06T 5/73* *(2024.01)*

(52) Classification Coopérative des Brevets (CPC):
**G06T 5/73; G06T 5/50;** G06T 2207/10152;
G06T 2207/30252

(86) Numéro de dépôt international:
**PCT/EP2021/068976**

(87) Numéro de publication internationale:
**WO 2022/022975 (03.02.2022 Gazette 2022/05)**

(54) **PROCEDE ET DISPOSITIF D'IMAGERIE SOUS-MARINE**

**VERFAHREN UND VORRICHTUNG ZUR UNTERWASSER-ABBILDUNG**

**METHOD AND DEVICE FOR UNDERWATER IMAGING**

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **30.07.2020   FR 2008098**

(43) Date de publication de la demande:
**07.06.2023   Bulletin 2023/23**

(73) Titulaire: **I2S**
**33608 Pessac Cedex (FR)**

(72) Inventeurs:
• **GUILLIEN, Jules**
**37100 TOURS (FR)**
• **TULLIO, Arnaud**
**94240 L'HAYE-LES-ROSES (FR)**

(74) Mandataire: **IPAZ**
**Bâtiment Platon**
**Parc Les Algorithmes**
**91190 Saint-Aubin (FR)**

(56) Documents cités:
**WO-A1-2014/018213      WO-A1-2019/129841**
**WO-A2-2007/129326      WO-A2-2014/170670**
**US-A- 6 122 404**

• **Y.Y. SCHECHNER ET AL: "Recovery of
Underwater Visibility and Structure by
Polarization Analysis", IEEE JOURNAL OF
OCEANIC ENGINEERING, vol. 30, no. 3, July 2005
(2005-07-01), pages 570 - 587, XP055013429,
ISSN: 0364-9059, DOI: 10.1109/JOE.2005.850871**

**EP 4 189 635 B1**

**Description**

**Domaine technique**

La présente invention concerne un procédé d'imagerie sous-marine polarisée. L'invention concerne également un dispositif d'imagerie sous-marine mettant en oeuvre un tel procédé.

Le domaine de l'invention est, de manière non limitative, celui de l'imagerie sous-marine. Plus particulièrement, mais de manière non limitative, le domaine de l'invention est celui des inspections sous-marines en eaux turbides.

**État de la technique**

Lorsque des images de scènes sont prises dans des milieux diffusifs, tels que la fumée, le brouillard ou des eaux turbides, leur contraste et leur luminosité peuvent être détériorés par la présence de particules suspendues dans ces milieux.

En particulier, la qualité de l'image dans les milieux turbides peut être dégradée par deux composantes :

- la lumière réfléchie par la scène naturelle, partiellement absorbée par les particules en suspension,

- la lumière indésirable diffusée par les particules, généralement appelée *«airlight»* selon la terminologie anglo-saxonne pour des images prises dans l'air. Cette lumière diffusée conduit à un voile qui détériore le contraste de l'image.

Lors du traitement des images, il est alors important de pouvoir déterminer avec précision l'intensité et la couleur de la lumière diffusée pour augmenter la visibilité.

De nombreuses méthodes de restauration d'images dans des milieux diffusifs ont été développées afin d'éliminer le voile. Ces méthodes dites de dévoilement (ou *« dehazing »* en langue anglaise) sont basées sur l'acquisition de plusieurs images d'une même scène pour plusieurs polarisations différentes de la lumière captée.

L'imagerie polarimétrique est notamment connue en photographie sous-marine, en mettant en oeuvre deux polarisations différentes.

De manière générale, des systèmes implémentant ces méthodes nécessitent de manipuler un analyseur de polarisation entre les différentes prises d'images, ainsi qu'un éclairage artificiel, polarisé ou non, de la scène sous-marine. Aussi, les méthodes de traitement sont relativement longues, en fonction de la taille des images acquises. Ainsi, les méthodes de dévoilement connues ne sont pas adaptées pour traiter des images en temps réel, par exemple pour de la vidéo.

US 6 122 404 A utilise un capteur d'images polarimétrique qui mesure séparément et simultanément chacun des quatre paramètres séparés de polarisation de Stokes d'un faisceau de lumière visible réfléchi par une scène. Le capteur comprend un ensemble de prisme composé, dont les éléments divisent le faisceau en quatre faisceaux séparés qui sont émis par l'ensemble de prisme dans des directions différentes. Quatre filtres polarimétriques et dispositifs d'imagerie séparés sont positionnés par rapport à l'ensemble de prismes pour recevoir séparément chacun des quatre faisceaux émis par l'ensemble de prismes. Ainsi, chacun des quatre dispositifs d'imagerie mesure l'intensité lumineuse réfléchie par la scène pour chacun des quatre paramètres de Stokes. U

**Exposé de l'invention**

Le but de la présente invention est de disposer d'un procédé et d'un dispositif d'imagerie sous-marine permettant de remédier aux inconvénients mentionnés.

Un objet de la présente invention est de proposer un procédé et un dispositif d'imagerie sous-marine permettant d'obtenir des images sous-marines nettes et bien contrastées en temps réel dans tous les types d'eaux.

Cet objectif est atteint avec un procédé d'imagerie sous-marine, comprenant les étapes suivantes :

- acquisition, par un capteur d'images polarimétrique, d'une image constitué de pixels, l'image acquise comprenant un voile de rétrodiffusion pour au moins une partie des pixels, l'image acquise comprenant au moins quatre sous-images acquises simultanément correspondant à au moins quatre polarisations différentes,
- calcul de paramètres de Stokes à partir des intensités lumineuses des pixels de l'image acquise,
- détermination, à partir des paramètres de Stokes, d'un angle de polarisation du voile de rétrodiffusion,
- détermination, à partir des paramètres de Stokes, d'un degré de polarisation du voile de rétrodiffusion,
- calcul de l'intensité lumineuse du voile de rétrodiffusion à partir de l'angle et du degré de polarisation du voile de rétrodiffusion, et

- calcul, à partir de l'image acquise et l'intensité lumineuse du voile de rétrodiffusion, d'une image améliorée,

le procédé étant mis en oeuvre au moyen d'un dispositif d'imagerie sous-marine.

Le procédé d'imagerie sous-marine permet d'améliorer la qualité des images acquises sous l'eau. Le procédé implémente une acquisition et un traitement polarimétriques des images, le traitement étant basé sur l'analyse de la distribution de l'angle de polarisation de la lumière captée. Cette analyse permet d'identifier l'intensité lumineuse provenant de la diffusion par les particules suspendues et ainsi de l'éliminer.

Le procédé selon l'invention ne met en oeuvre aucun éclairage artificiel de la scène à imager. Seule la lumière du soleil éclaire ainsi la scène. La lumière solaire est une lumière dite non polarisée. Cependant, d'après les lois de Snell-Descartes et de Maxwell, l'interface air/eau a pour effet de la polariser partiellement. L'angle de polarisation de la lumière dépend de la position du soleil dans le ciel. Dans tous les cas, la lumière est suffisamment polarisée après son passage de l'interface air/eau. Aussi, la lumière est partiellement polarisée lorsqu'elle est diffusée par des particules suspendues dans l'eau. La polarisation partielle, due à ces deux phénomènes, de la lumière diffusée permet d'appliquer les étapes de traitement du procédé selon l'invention.

L'image acquise comprend au moins quatre sous-images correspondant à au moins quatre polarisations différentes. Les sous-images sont alors acquises simultanément, leur acquisition ne nécessitant aucune manipulation ou réglage d'analyseur. Chaque sous-image représente complètement la scène comme l'image acquise elle-même.

L'étape de calcul de paramètres de Stokes, et ainsi toutes les autres étapes de traitement du procédé selon l'invention, est réalisée à partir des intensités lumineuses des pixels de l'image acquise. Ceci signifie que toute l'image, avec tous les pixels, peut être utilisée pour effectuer ce calcul. En effet, aucun choix de zone ou région de l'image n'est effectué préalablement.

Grâce à l'acquisition polarimétrique et simultanée, combinée avec le traitement de toute la surface de l'image, le procédé selon l'invention peut être mis en oeuvre en temps réel, notamment pour de la vidéo.

Par la suite, le terme « sous-marin » doit être compris en désignant « sous l'eau » de manière générale, le procédé et le dispositif selon l'invention étant adaptés pour être mis en oeuvre en milieu sous-marin, mais bien entendu également dans un lac, un fleuve, une rivière, etc.

Selon un mode de réalisation avantageux, les polarisations peuvent être linéaires et correspondre à 0°, 45°, 90° et 135°.

Selon un mode de réalisation alternatif, deux des polarisations peuvent être linéaires et les deux autres polarisation circulaires gauche et droite.

Selon un mode de réalisation, l'étape de détermination d'un angle de polarisation peut être réalisée par :

- l'établissement d'une carte de valeurs d'angle de polarisation à partir des paramètres de Stokes, et
- la détermination de la valeur d'angle de polarisation la plus représentée, dit angle de polarisation du voile, dans l'image acquise à partir de la carte de valeurs d'angles.

De manière similaire, l'étape de détermination d'un degré de polarisation peut être réalisée par :

- l'établissement d'une carte de valeurs de degré de polarisation à partir des paramètres de Stokes,
- la détermination de la valeur de degré de polarisation la plus représentée, dit degré de polarisation du voile, dans l'image acquise à partir de la carte de valeurs de degrés.

Selon un mode de réalisation, le procédé peut comprendre en outre une étape d'estimation de l'intensité lumineuse du voile de rétrodiffusion à l'infini.

En effet, on peut supposer qu'à l'infini, le voile de rétrodiffusion est entièrement dû aux particules suspendus, ayant une polarisation définie. L'intensité lumineuse à l'infini constitue donc une référence de l'état et de la nature (polarisation, couleur) du voile de particules. Ainsi, il est possible d'estimer le pourcentage de rétrodiffusion présent devant la scène ou l'objet imagé que l'on souhaite éliminer, sans avoir besoin d'information sur la distance de l'objet ou de la scène.

Selon un mode de réalisation, l'étape d'estimation de l'intensité lumineuse du voile de rétrodiffusion à l'infini peut être réalisée par :

- l'établissement d'une carte de valeurs d'intensité lumineuse à partir de l'angle et du degré de polarisation du voile de rétrodiffusion,
- la détermination de la valeur d'intensité la plus représentée, dit intensité lumineuse à l'infini, dans l'image acquise à partir de la carte de valeurs d'intensités.

Selon un mode de réalisation, l'étape du calcul de l'intensité lumineuse du voile de rétrodiffusion peut comprendre une étape de calcul de la moyenne des intensités lumineuses du voile de rétrodiffusion de toutes les sous-images.

De manière avantageuse, l'étape de calcul de paramètres de Stokes est réalisée en moyennant les paramètres de Stokes sur un nombre n de pixels adjacents, avec n = 4...8 par exemple.

Cette étape permet d'avoir une image restaurée dont les valeurs d'intensité adjacents ne sont pas trop différentes, pour ainsi éviter des artefacts numériques.

Avantageusement, toutes les étapes de traitement d'image peuvent être réalisées indépendamment pour chaque canal de couleur R, G et B.

Ceci tient compte du fait qu'en milieu sous-marin, l'intensité de la lumière est atténuée en fonction de sa longueur d'onde et de la distance parcourue dans l'eau.

Selon un autre aspect de la même invention, il est proposé un dispositif d'imagerie sous-marine comprenant ;

- au moins un capteur d'images polarimétrique comprenant ;

  • une pluralité de capteurs élémentaires,
  • une matrice d'analyseurs de polarisation agencée de sorte à ce que chaque capteur élémentaire soit équipé d'un analyseur, chaque analyseur étant orienté selon une d'au moins quatre polarisations différentes, de sorte à ce que les orientations des analyseurs soient distribuées de manière homogène sur la surface du capteur,

  le capteur d'images polarimétrique étant configuré pour acquérir une image comprenant au moins quatre sous-images acquises simultanément correspondant aux au moins quatre polarisations différentes ; et
- un module de traitement d'image.

Le dispositif est configuré pour mettre en oeuvre les étapes du procédé selon l'invention.

Avantageusement, le dispositif est configuré pour être adaptable sur un véhicule sous-marin téléguidé (ROV, *remotely operated unerwater vehicle*) ou autonome.

Ce type de véhicules sous-marines permet, par exemple, d'effectuer des inspections de barrage, de cuves, de coques de bateau, de pipeline, ou plus largement toutes les inspections d'installations immergées partiellement ou totalement dans l'eau. Ils permettent aussi de réaliser des travaux sous-marins à des profondeurs ou dans des lieux où l'homme ne peut pas se rendre. Les secteurs d'applications sont notamment les suivants : constructions, barrages, énergies renouvelables marines, forages, l'inspection, la maintenance et la réparation d'ouvrages, télécoms, l'industrie pétrolière et gazière, le démantèlement de plateformes, l'industrie nucléaire et la défense.

Alternativement, le dispositif selon l'invention peut être directement porté par des plongeurs.

Selon encore un autre aspect de la même invention, il est proposé un programme d'ordinateur comprenant des instructions qui conduisent le dispositif d'imagerie sous-marine selon l'invention à exécuter les étapes du procédé d'imagerie sous-marine selon l'invention.

Selon encore un autre aspect, l'invention concerne un support de données lisible par ordinateur, sur lequel est enregistré le programme d'ordinateur selon l'invention.

## Description des figures et modes de réalisation

D'autres avantages et caractéristiques apparaîtront à l'examen de la description détaillée d'exemples nullement limitatifs, et des dessins annexés sur lesquels :

- [Fig.1] la Figure 1 est une représentation schématique d'un exemple de réalisation non limitatif d'un dispositif d'imagerie sous-marine selon l'invention ;

- [Fig.2] la Figure 2 est une représentation schématique d'un exemple de capteur optique pouvant être utilisé dans le dispositif selon la présente invention ;

- [Fig.3] la Figure 3 est une représentation schématique d'un exemple de réalisation non limitatif d'un procédé d'imagerie sous-marine selon la présente invention ;

- [Fig.4] la Figure 4 est un exemple d'image acquise selon la présente invention ; et

- [Fig.5] la Figure 5 illustre des étapes du procédé de l'invention selon un exemple de réalisation.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

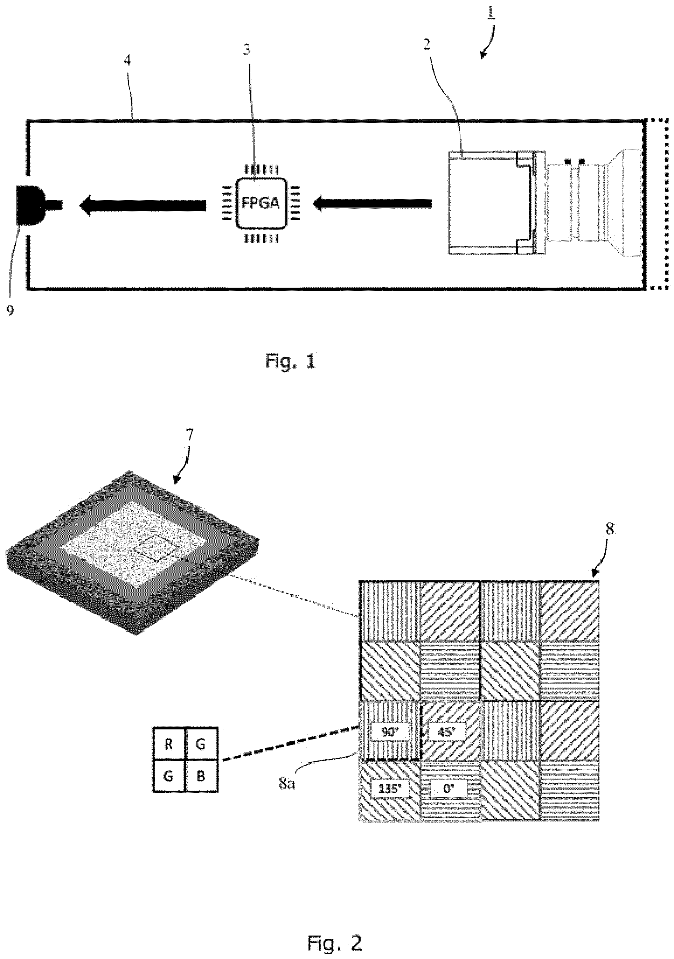

La Figure 1 est une représentation schématique d'un exemple de réalisation non limitatif d'un dispositif d'imagerie sous-marine pouvant être mis en oeuvre dans la cadre de la présente invention. Le dispositif peut notamment être utilisé pour mettre en oeuvre le procédé de l'invention.

Le dispositif 1, représenté sur la Figure 1, comprend une caméra numérique 2 placée dans un caisson étanche 5 avec une carte électronique de traitement 4. La caméra 2 comprend un objectif 3. La caméra 2 est agencée de sorte à ce que l'objectif 3 soit positionné en regard d'un hublot transparent 6 du caisson 5.

La caméra 2 est équipée d'un capteur polarimétrique, tel qu'illustré sur la Figure 2. Le capteur 7 est composé d'un capteur matriciel de type CMOS, ayant une pluralité de capteurs élémentaires, et d'une matrice d'analyseurs 8 ayant une pluralité d'analyseurs 8a. Chaque capteur élémentaire est associé à un analyseur 8a.

La Figure 2 montre également schématiquement une partie du capteur polarimétrique 7. Comme il est suggéré sur la Figure 2 par des hachures, sur chaque capteur élémentaire peut être déposé un filtre polarisant en forme de réseau. Une microlentille peut être déposée sur chaque filtre.

Comme montré sur la Figure 1, le caisson 5 comprend en outre un connecteur étanche 9 permettant de connecter un câble de transmission pour transmettre les données de la carte électronique 4 en temps réel à un équipement distant, par exemple terrestre ou un bateau, depuis lequel peut être piloté un ROV portant le dispositif 1 à l'aide de la caméra 2.

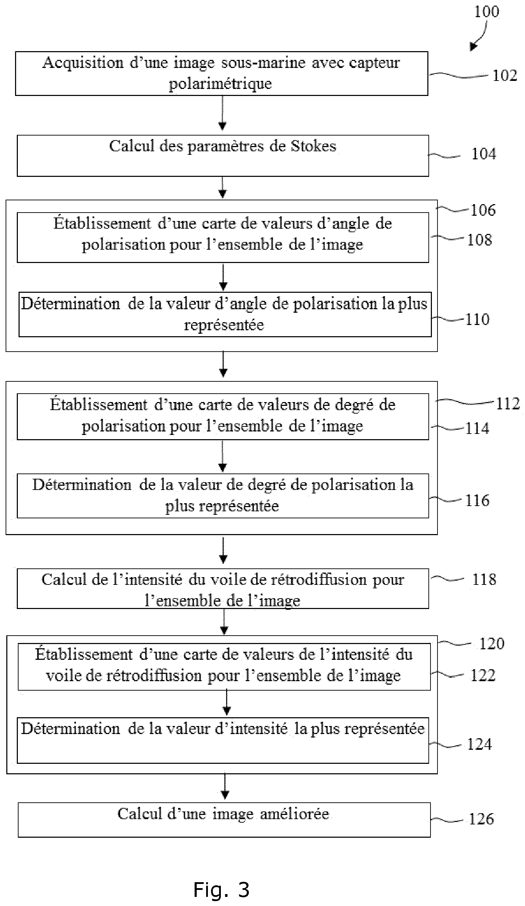

La Figure 3 est une représentation schématique d'un exemple de réalisation non limitatif d'un procédé d'imagerie sous-marine selon l'invention.

Le procédé 100, représenté sur la Figure 3, comprend une étape 102 d'acquisition d'une image sous-marine. Cette étape 102 peut être réalisé, par exemple, par un capteur d'images polarimétrique tel que décrit en référence aux Figures 1 et 2. L'image acquise comprend un voile de rétrodiffusion pour au moins une partie des pixels.

Grâce à la nature du capteur polarimétrique, l'image acquise comprend au moins quatre sous-images correspondant à au moins quatre polarisations différentes de la lumière captée.

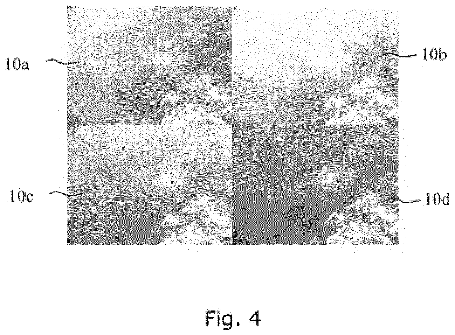

A titre d'exemple, ces polarisations sont de 0°, 45°, 90° et 135°. Un exemple de quatre sous-images 10a, 10b, 10c, 10d avec ces polarisations est donné sur la Figure 4.

Dans un milieu turbide, l'intensité I reçue par le capteur est composée de l'intensité réfléchie par la scène à travers le voile de particules, noté D, et l'intensité du voile de rétrodiffusion, c'est-à-dire celle réfléchie par les particules en suspension, noté A. La composante A est partiellement polarisée. On peut exprimer I par :

[Math1]

$$I = D + A,$$

où D et A peuvent être respectivement exprimés par les relations suivantes :

[Math2]

$$D = Lt(z),$$

[Math3]

$$A = A_{inf}[1 - t(z)].$$

$L$ représente l'intensité de la lumière sans avoir été atténuée par le voile de particules, $A_{inf}$ l'intensité du voile de rétrodiffusion pour un objet imaginaire situé à l'infini et $t(z)$ la transmittance de l'eau. En supposant le coefficient d'extinction $\beta$ invariant avec la distance $z$, et ce quel que soit la nature de l'eau dans laquelle l'image est prise, $t(z)$ peut-être exprimé par :

[Math4]

$$t(z) = e^{-\beta z}.$$

A l'aide des équations précédentes, on peut exprimer L par :

[Math5]

$$L = \frac{I - A}{1 - A/A_{inf}}.$$

Lors d'une étape 104, des paramètres de Stokes sont calculés pour chacun des pixels de l'image acquise à partir des intensités lumineuses $I$ captées. Les paramètres de Stokes sont nécessaires pour calculer l'intensité $A$, l'angle de polarisation (AOP) $\theta_A$ et le degré de polarisation (DOP) $p_A$ du voile de rétrodiffusion.

Pour quatre images correspondant aux polarisations de 0°, 45°, 90° et 135°, les paramètres de Stokes $S_0$, $S_1$ et $S_2$ sont calculés de façon suivante :

[Math6]

$$S_0 = I_0 + I_{90},$$

[Math7]

$$S_1 = I_0 - I_{90},$$

[Math8]

$$S_2 = I_{45} - I_{135},$$

où $S_0$ représente l'intensité totale de la lumière incidente, et $S_1$ et $S_2$ représentent les états de polarisations de la lumière incidente sur le capteur.

Il est à noter qu'à l'aide de l'équation [Math6], $S_0$ est calculé en n'utilisant que deux des quatre sous-images, permettant ainsi de rendre cette étape plus rapide. Ceci est possible en utilisant les projections des polarisations 45° et 135° selon 0° et 90°.

D'après [Math6-8], il est possible d'obtenir l'angle de polarisation $\theta$ et le degré de polarisation $p$ de la lumière incidente selon les relations suivantes :

[Math9]

$$\theta = \frac{1}{2} \arctan \frac{S_2}{S_1},$$

[Math10]

$$p = \frac{\sqrt{S_1^2 + S_2^2}}{S_0}.$$

Comme le procédé selon l'invention ne met pas en oeuvre d'éclairage artificiel, il est basée uniquement sur la polarisation de la lumière naturelle incidente par le passage air/eau et par les particules en suspension. Ces particules renvoient donc une lumière polarisée.

Lors d'une étape 106 du procédé 100, l'angle de polarisation $\theta_A$ du voile de rétrodiffusion est déterminé à partir des paramètres de Stokes. Pour le mode de réalisation du procédé représenté sur la Figure 3, l'étape 106 est réalisée de la manière suivante.

Un milieu sous-marin dit turbide étant fortement chargé en particules, il est possible d'assumer que pour estimer l'AOP du voile de particules $\theta_A$, il suffit de déterminer la valeur de $\theta$ la plus représentée dans l'image. On peut notamment supposer que statistiquement, l'angle de polarisation du voile de particules est le plus représenté dans l'image, même si l'on s'intéresse à ensemble de l'image et pas uniquement à une zone de voile. En effet, en comparant les histogrammes d'angles de polarisation pour la zone de voile et pour l'image entière, pour une pluralité d'images de scènes différentes, on peut constater que le maximum est sensiblement à la même valeur d'angle dans les deux cas.

Ainsi, lors d'une étape 108, une carte de valeurs d'angle de polarisation $\theta$ à partir des paramètres de Stokes est établie pour l'image acquise.

Ensuite, lors d'une étape 110, la valeur d'angle de polarisation la plus représentée est déterminée. A partir de la carte de valeurs, un histogramme de valeurs d'angles de polarisation est calculé, puis la valeur maximale $\theta_A$ de l'histogramme est récupérée.

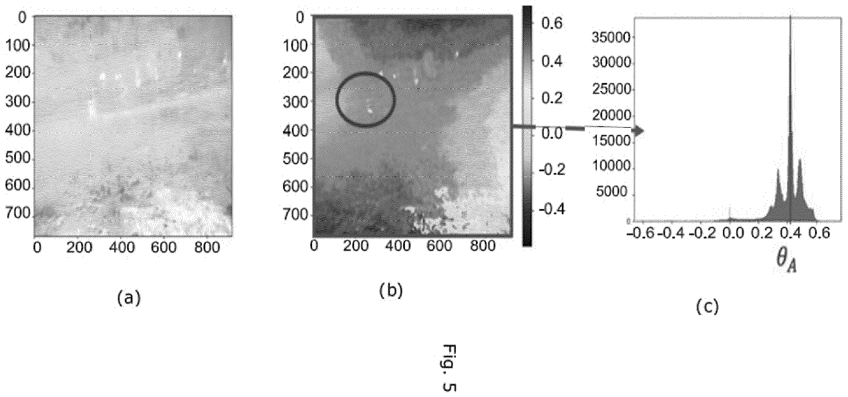

La Figure 5 illustre les étapes de détermination de l'angle de polarisation du voile de particules. La Figure 5(a) montre une image prise dans l'eau, non traitée. La Figure 5(b) montre la carte de valeurs d'angles de polarisation présents dans l'image. Le cercle correspond à une zone dite « de voile », c'est-à-dire, sans objet à imager. Enfin, la Figure 5(c) montre l'histogramme des valeurs d'angle pour toute la scène ainsi que la valeur maximum, correspondant à l'angle $\theta_A$.

Lors d'une étape 112 du procédé 100, le degré de polarisation $p$ du voile de rétrodiffusion est déterminé à partir des paramètres de Stokes. Cette étape 112 permet de connaître le pourcentage de l'intensité reçue par le capteur se trouvant dans l'état de polarisation $\theta_A$. Selon le mode de réalisation représenté sur la Figure 3, l'étape 112 est réalisée la même manière que l'étape 106 de la détermination de l'angle de polarisation.

Ainsi, lors d'une étape 114, une carte de valeurs de degré de polarisation $p$ à partir des paramètres de Stokes est établie pour l'image acquise.

Ensuite, lors d'une étape 116, la valeur de degré de polarisation $p_A$ la plus représentée est déterminée à partir de l'histogramme de valeurs.

Lors d'une étape 118, l'intensité lumineuse $A$ du voile de rétrodiffusion est calculée à partir de l'angle $\theta_A$ et du degré $p_A$ de polarisation du voile de rétrodiffusion, selon la relation suivante :

[Math11]

$$A = \frac{2I_0}{1 + p_A \cos 2\theta_A}.$$

Selon un mode de réalisation particulièrement avantageux, le calcul de l'intensité du voile A peut être réalisé de la manière suivante :

[Math12]

$$A = \frac{\frac{1}{2}(I_0 + I_{45} + I_{90} + I_{135})}{1 + p_A \cos 2\theta_A}.$$

Ceci revient à estimer $A$ pour chacune des quatre sous-images $I_0$, $I_{45}$, $I_{90}$ et $I_{135}$ correspondant aux quatre polarisations, et moyenner ces quatre valeurs de A pour trouver la valeur finale de $A$.

Ce mode de réalisation permet d'améliorer encore la qualité de la restauration de l'image et notamment de diminuer des sauts de couleur sur l'image restaurée.

À partir de $A$, il est possible d'estimer l'intensité $A_{inf}$ du voile de rétrodiffusion à l'infini. Selon le mode de réalisation représenté sur la Figure 3, cette étape 120 est réalisée la même manière que les étapes 106 et 112 de la détermination de l'angle et du degré de polarisation, respectivement.

Ainsi, lors d'une étape 122, une carte de valeurs d'intensité lumineuse est établie pour l'ensemble de l'image acquise.

Ensuite, lors d'une étape 124, la valeur de l'intensité lumineuse la plus représentée, dite intensité du voile à l'infini $A_{inf}$, est déterminée à partir de l'histogramme de valeurs.

Tous les paramètres entrant dans le calcul d'une image améliorée, ou restaurée, ont ainsi été déterminés (voir [Math5]).

Selon un mode de réalisation, pour rendre le traitement d'image automatique et plus performant, des facteurs de correction sont introduits dans la relation [Math5]. Ceci permet d'éviter des aberrations dans le calcul de *L* si *A* est très proche de *Ainf*.

Premièrement, un coefficient α est introduit dans l'équation [Math5] :

[Math13]

$$L = \frac{I - A}{1 - \alpha A / A_{inf}}.$$

Ce coefficient est un paramètre réglable compris entre 0 et 1. De manière avantageuse, la valeur de 0,5 est choisie car elle donne de bons résultats dans des tests dans différents types d'eau. En effet, pour un traitement automatique, il n'est pas envisageable de déterminer le paramètre α pour chaque nouvelle image acquise. La valeur de 0,5 permet de ne pas détériorer le traitement d'image tout en évitant les artéfacts numériques.

Deuxièmement, une intensité normalisée $A_{norm}$ du voile de rétrodiffusion est introduit dans l'équation [Math5] :

[Math14]

$$A_{norm} = \frac{1}{2} \frac{A}{\max \frac{A}{A_{inf}}}.$$

Cela permet également de diminuer les artefacts numériques pour obtenir un traitement d'image plus performant.

Ainsi, lors d'une étape 126, l'intensité lumineuse *L* de la lumière sans avoir été atténuée par des particules suspendues est calculée selon l'équation suivante :

[Math15]

$$L = \frac{I - A}{1 - A_{norm}}.$$

On obtient une image restaurée ne présentant plus de défauts ni d'artéfacts numériques.

Les étapes 104-126 de traitement d'image du procédé 100 selon l'invention sont réalisées indépendamment pour chaque canal de couleur R, G et B de l'image acquise.

Le procédé d'imagerie sous-marine selon la présente invention peut être implémenté sur une carte électronique de type FPGA (*field-programmable gate array*), par exemple composé d'un Zynq 7020 de la société Xilinx. Une telle carte est très compacte (70 mm x 45 mm) et peut être facilement embarquée sur un ROV, par exemple.

Le traitement d'image selon le procédé de l'invention étant massivement parallélisable, il est possible de retranscrire les instructions du traitement en VHDL (de l'anglais *VHSIC hardware description language* ; VHSIC signifiant *very high speed integrated circuits*), permettant de bien exploiter le potentiel du FPGA.

Il est par ailleurs envisageable d'implémenter des solutions de *deep learning* (apprentissage profond) dans de telles cartes électroniques.

**Revendications**

1. Procédé d'imagerie sous-marine (100), comprenant les étapes suivantes :

   ◦ acquisition (102), par un capteur d'images polarimétrique (7), d'une image constitué de pixels, l'image acquise comprenant un voile de rétrodiffusion pour au moins une partie des pixels, l'image acquise comprenant au moins quatre sous-images (10a, 10b, 10c, 10d) acquises simultanément correspondant à au moins quatre polarisations différentes,
   ◦ calcul (104) de paramètres de Stokes à partir des intensités lumineuses des pixels de l'image acquise,

**caractérisé en ce qu'**il comprend les étapes suivantes:

◦ détermination (106), à partir des paramètres de Stokes, d'un angle de polarisation du voile de rétrodiffusion,
◦ détermination(112), à partir des paramètres de Stokes, d'un degré de polarisation du voile de rétrodiffusion,
◦ calcul (118) de l'intensité lumineuse du voile de rétrodiffusion à partir de l'angle et du degré de polarisation du voile de rétrodiffusion, et
◦ calcul (126), à partir de l'image acquise et l'intensité lumineuse du voile de rétrodiffusion, d'une image améliorée,

le procédé étant mis en oeuvre au moyen d'un dispositif d'imagerie sous-marine.

2. Procédé (100) selon la revendication précédente, **caractérisé en ce que** les polarisations sont linéaires et correspondent à 0°, 45°, 90° et 135°.

3. Procédé (100) selon la revendication 1 ou 2, **caractérisé en ce que** l'étape (106) de détermination d'un angle de polarisation est réalisée par :

- l'établissement (108) d'une carte de valeurs d'angle de polarisation à partir des paramètres de Stokes, et
- la détermination (110) de la valeur d'angle de polarisation la plus représentée, dit angle de polarisation du voile, dans l'image acquise à partir de la carte de valeurs d'angles.

4. Procédé (100) selon l'une quelconque des revendications précédentes, **caractérisé en ce que** l'étape (112) de détermination d'un degré de polarisation est réalisée par :

- l'établissement (114) d'une carte de valeurs de degré de polarisation à partir des paramètres de Stokes,
- la détermination (116) de la valeur de degré de polarisation la plus représentée, dit degré de polarisation du voile, dans l'image acquise à partir de la carte de valeurs de degrés.

5. Procédé (100) selon l'une quelconque des revendications précédentes, **caractérisé en ce qu'**il comprend en outre une étape (120) d'estimation de l'intensité lumineuse du voile de rétrodiffusion à l'infini.

6. Procédé (100) selon la revendication 5, **caractérisé en ce que** l'étape (120) d'estimation de l'intensité lumineuse du voile de rétrodiffusion à l'infini est réalisée par :

- l'établissement (122) d'une carte de valeurs d'intensité lumineuse à partir de l'angle et du degré de polarisation du voile de rétrodiffusion,
- la détermination (124) de la valeur d'intensité la plus représentée, dit intensité lumineuse à l'infini, dans l'image acquise à partir de la carte de valeurs d'intensités.

7. Procédé (100) selon l'une quelconque des revendications précédentes, **caractérisé en ce que** l'étape (118) du calcul de l'intensité lumineuse du voile de rétrodiffusion comprend une étape de calcul de la moyenne des intensités lumineuses de toutes les sous-images.

8. Procédé (100) selon l'une quelconque des revendications précédentes, **caractérisé en ce que** toutes les étapes (104, 106, 112, 118) de traitement d'image sont réalisées indépendamment pour chaque canal de couleur R, G et B.

9. Dispositif d'imagerie sous-marine (1) comprenant :

- au moins un capteur d'images polarimétrique (7) comprenant :

◦ une pluralité de capteurs élémentaires,
◦ une matrice (8) d'analyseurs de polarisation agencée de sorte à ce que chaque capteur élémentaire soit équipé d'un analyseur (8a), chaque analyseur (8a) étant orienté selon une d'au moins quatre polarisations différentes, de sorte à ce que les orientations des analyseurs (8a) soient distribuées de manière homogène sur la surface du capteur (7),

le capteur d'images polarimétrique (7) étant configuré pour acquérir une image comprenant au moins quatre sous-images (10a, 10b, 10c, 10d) acquises simultanément correspondant aux au moins quatre polarisations différentes ; et

- un module de traitement d'image (3) ;

le dispositif (1) étant configuré pour mettre en oeuvre les étapes du procédé (100) selon l'une quelconque des revendication précédentes.

10. Dispositif (1) selon la revendication 9, **caractérisé en ce qu'**il est configuré pour être adaptable sur un véhicule sous-marin téléguidé ou autonome.

11. Programme d'ordinateur comprenant des instructions qui conduisent le dispositif d'imagerie sous-marine selon la revendication 9 à exécuter les étapes du procédé d'imagerie sous-marine selon l'une quelconque des revendications 1 à 8.

12. Support de données lisible par ordinateur, sur lequel est enregistré le programme d'ordinateur selon la revendication 11.

**Patentansprüche**

1. Verfahren zur Unterwasserbildgebung (100), das die folgenden Schritte umfasst:

   ◦ Erfassen (102) eines aus Pixeln gebildeten Bildes durch einen polarimetrischen Bildsensor (7), wobei das erfasste Bild einen Rückstreu-Schleier für mindestens einen Teil der Pixel umfasst, wobei das erfasste Bild mindestens vier Teilbilder (10a, 10b, 10c, 10d) umfasst, die gleichzeitig erfasst sind und mindestens vier verschiedenen Polarisationen entsprechen,
   ◦ Berechnen (104) der Stokes-Parameter auf der Grundlage der Lichtintensitäten der Pixel des erfassten Bildes,

   **dadurch gekennzeichnet, dass** es die folgenden Schritte umfasst:

   ◦ Bestimmen (106), basierend auf den Stokes-Parametern, eines Polarisationswinkels des Rückstreu-Schleiers,
   ◦ Bestimmen (112), basierend auf den Stokes-Parametern, eines Polarisationsgrades des Rückstreu-Schleiers,
   ◦ Berechnen (118) der Lichtintensität des Rückstreu-Schleiers basierend auf dem Polarisationswinkel und dem Polarisationsgrad des Rückstreu-Schleiers, und
   ◦ Berechnen (126), basierend auf dem erfassten Bild und der Lichtintensität des Rückstreu-Schleiers, eines verbesserten Bildes,

   wobei das Verfahren mittels einer Vorrichtung zur Unterwasserbildgebung durchgeführt wird.

2. Verfahren (100) nach dem vorhergehenden Anspruch, **dadurch gekennzeichnet, dass** die Polarisationen linear sind und 0°, 45°, 90° und 135° entsprechen.

3. Verfahren (100) nach Anspruch 1 oder 2, **dadurch gekennzeichnet, dass** der Schritt (106) des Bestimmens eines Polarisationswinkels durchgeführt wird durch:

   - Erstellen (108) einer Karte von Polarisationswinkelwerten auf der Grundlage der Stokes-Parameter, und
   - Bestimmen (110) des am meisten repräsentierten Polarisationswinkelwertes, des sogenannten Polarisationswinkels des Schleiers, in dem erfassten Bild auf der Grundlage der Karte der Winkelwerte.

4. Verfahren (100) nach einem der vorhergehenden Ansprüche, **dadurch gekennzeichnet, dass** der Schritt (112) des Bestimmens eines Polarisationsgrades durchgeführt wird durch:

   - Erstellen (114) einer Karte von Polarisationsgradwerten auf der Grundlage der Stokes-Parameter,
   - Bestimmen (116) des am meisten repräsentierten Polarisationsgradwertes, des sogenannten Polarisationsgrades des Schleiers, in dem erfassten Bild auf der Grundlage der Karte der Gradwerte.

5. Verfahren (100) nach einem der vorhergehenden Ansprüche, **dadurch gekennzeichnet, dass** es weiterhin einen Schritt (120) des Schätzens der Lichtintensität des Rückstreu-Schleiers im Unendlichen umfasst.

6. Verfahren (100) nach Anspruch 5, **dadurch gekennzeichnet, dass** der Schritt (120) des Schätzens der Lichtintensität des Rückstreu-Schleiers im Unendlichen durchgeführt wird durch:

- Erstellen (122) einer Karte von Lichtintensitätswerten auf der Grundlage des Polarisationswinkels und des Polarisationsgrades des Rückstreu-Schleiers,
- Bestimmen (124) des am stärksten vertretenen Intensitätswertes, der sogenannten Lichtintensität im Unendlichen, in dem erfassten Bild auf der Grundlage der Karte der Lichtintensitätswerte.

7. Verfahren (100) nach einem der vorhergehenden Ansprüche, **dadurch gekennzeichnet, dass** der Schritt (118) des Berechnens der Lichtintensität des Rückstreu-Schleiers einen Schritt der Berechnung des Durchschnitts der Lichtintensitäten aller Teilbilder umfasst.

8. Verfahren (100) nach einem der vorhergehenden Ansprüche, **dadurch gekennzeichnet, dass** alle Bildverarbeitungsschritte (104, 106, 112, 118) unabhängig für jeden Farbkanal R, G und B durchgeführt werden.

9. Vorrichtung zur Unterwasserbildgebung (1), umfassend:

- mindestens einen polarimetrischen Bildsensor (7) umfassend:

   ◦ eine Vielzahl von Elementarsensoren,
   ◦ eine Matrix (8) von Polarisationsanalysatoren, die so angeordnet sind, dass jeder Elementarsensor mit einem Analysator (8a) ausgestattet ist, wobei jeder Analysator (8a) gemäß einer von mindestens vier verschiedenen Polarisationen ausgerichtet ist, so dass die Ausrichtungen der Analysatoren (8a) auf homogene Weise über die Oberfläche des Sensors (7) verteilt sind,

   wobei der polarimetrische Bildsensor (7) so konfiguriert ist, dass er ein Bild erfasst, das mindestens vier Teilbilder (10a, 10b, 10c, 10d) umfasst, die gleichzeitig erfasst sind und den mindestens vier verschiedenen Polarisationen entsprechen; und
   - ein Bildverarbeitungsmodul (3);

   wobei die Vorrichtung (1) so konfiguriert ist, dass sie die Schritte des Verfahrens (100) nach einem der vorhergehenden Ansprüche ausführt.

10. Vorrichtung (1) nach Anspruch 9, **dadurch gekennzeichnet, dass** sie so konfiguriert ist, dass sie an ein ferngesteuertes oder autonomes Unterwasserfahrzeug angebracht werden kann.

11. Computerprogramm mit Befehlen, die die Vorrichtung zur Unterwasserbildgebung nach Anspruch 9 dazu veranlassen, die Schritte des Verfahrens zur Unterwasserbildgebung nach einem der Ansprüche 1 bis 8 auszuführen.

12. Computerlesbarer Datenträger, auf dem das Computerprogramm nach Anspruch 11 aufgezeichnet ist.


**Claims**

1. Method for underwater imaging (100), comprising the following steps:

   ◦ acquiring (102), by a polarimetric image sensor (7), an image made up of pixels, the acquired image comprising a backscattered veil for at least a portion of the pixels, the acquired image comprising at least four sub-images (10a, 10b, 10c, 10d), acquired simultaneously, corresponding to at least four different polarizations,
   ◦ calculating (104) Stokes parameters based on the luminous intensities of the pixels of the acquired image,

   **characterized in that** it comprises the following steps:

   ◦ determining (106), based on the Stokes parameters, an angle of polarization of the backscattered veil,
   ◦ determining (112), based on the Stokes parameters, a degree of polarization of the backscattered veil,
   ◦ calculating (118) the luminous intensity of the backscattered veil based on the angle and the degree of polarization of the backscattered veil, and
   ◦ calculating (126), based on the acquired image and the luminous intensity of the backscattered veil, an improved image,

the method being implemented by means of a device for underwater imaging.

2. Method (100) according to the preceding claim, **characterized in that** the polarizations are linear and correspond to 0°, 45°, 90° and 135°.

3. Method (100) according to claim 1 or 2, **characterized in that** the step (106) of determining an angle of polarization is carried out by:

    - drawing up (108) a map of angle of polarization values based on the Stokes parameters, and
    - determining (110) the most represented angle of polarization value, called angle of polarization of the veil, in the acquired image based on the map of angle values.

4. Method (100) according to any one of the preceding claims, **characterized in that** the step (112) of determining a degree of polarization is carried out by:

    - drawing up (114) a map of degree of polarization values based on the Stokes parameters,
    - determining (116) the most represented degree of polarization value, called degree of polarization of the veil, in the acquired image based on the map of degree values.

5. Method (100) according to any one of the preceding claims, **characterized in that** it also comprises a step (120) of estimating the luminous intensity of the backscattered veil at infinity.

6. Method (100) according to claim 5, **characterized in that** the step (120) of estimating the luminous intensity of the backscattered veil at infinity is carried out by:

    - drawing up (122) a map of luminous intensity values based on the angle and the degree of polarization of the backscattered veil,
    - determining (124) the most represented intensity value, called luminous intensity to infinity, in the acquired image based on the map of intensity values.

7. Method (100) according to any one of the preceding claims, **characterized in that** the step (118) of calculating the luminous intensity of the backscattered veil comprises a step of calculating the average of the luminous intensities of all the sub-images.

8. Method (100) according to any one of the preceding claims, **characterized in that** all the image processing steps (104, 106, 112, 118) are carried out independently for each colour channel R, G, and B.

9. Device for underwater imaging (1) comprising:

    - at least one polarimetric image sensor (7) comprising:

        ◦ a plurality of elementary sensors,
        ◦ a matrix (8) of polarization analyzers arranged so that each elementary sensor is equipped with an analyzer (8a), each analyzer (8a) being oriented according to one of at least four different polarizations so that the orientations of the analyzers (8a) are distributed in a homogeneous manner over the surface of the sensor (7),

    the polarimetric image sensor (7) being configured to acquire an image comprising at least four sub-images (10a, 10b, 10c, 10d), acquired simultaneously, corresponding to the at least four different polarizations; and
    - an image processing module (3);

    the device (1) being configured to implement the steps of the method (100) according to any one of the preceding claims.

10. Device (1) according to claim 9, **characterized in that** it is configured to be adaptable on a remotely operated or autonomous underwater vehicle.

11. Computer program comprising instructions which lead the device for underwater imaging according to claim 9 to execute the steps of the method for underwater imaging according to any one of claims 1 to 8.

**12.** Computer-readable data medium on which the computer program according to claim 11 is recorded.

Fig. 1

Fig. 2

100

| Acquisition d'une image sous-marine avec capteur polarimétrique | 102 |

↓

| Calcul des paramètres de Stokes | 104 |

↓

106

| Établissement d'une carte de valeurs d'angle de polarisation pour l'ensemble de l'image | 108 |

↓

| Détermination de la valeur d'angle de polarisation la plus représentée | 110 |

↓

112

| Établissement d'une carte de valeurs de degré de polarisation pour l'ensemble de l'image | 114 |

↓

| Détermination de la valeur de degré de polarisation la plus représentée | 116 |

↓

| Calcul de l'intensité du voile de rétrodiffusion pour l'ensemble de l'image | 118 |

↓

120

| Établissement d'une carte de valeurs de l'intensité du voile de rétrodiffusion pour l'ensemble de l'image | 122 |

↓

| Détermination de la valeur d'intensité la plus représentée | 124 |

↓

| Calcul d'une image améliorée | 126 |

Fig. 3

10a

10b

10c

10d

Fig. 4

Fig. 5

**EP 4 189 635 B1**

**Documents brevets cités dans la description**

- US 6122404 A